(19) **Europäisches Patentamt / European Patent Office / Office européen des brevets**

(11) **EP 4 446 692 B1**

(12) # EUROPEAN PATENT SPECIFICATION

(45) Date of publication and mention
of the grant of the patent:
**28.01.2026 Bulletin 2026/05**

(21) Application number: **24166645.2**

(22) Date of filing: **27.03.2024**

(51) International Patent Classification (IPC):
$G01B\ 7/02^{(2006.01)}$ $G01B\ 7/06^{(2006.01)}$

(52) Cooperative Patent Classification (CPC):
**G01B 7/10; G01B 7/023**

(54) **EDDY CURRENT MULTI-PARAMETER MEASUREMENT DEVICE AND CORRESPONDING MEASUREMENT METHOD**

WIRBELSTROM-MULTIPARAMETER-MESSVORRICHTUNG UND ENTSPRECHENDES MESSVERFAHREN

DISPOSITIF DE MESURE MULTI-PARAMÈTRES À COURANTS DE FOUCAULT ET PROCÉDÉ DE MESURE CORRESPONDANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **14.04.2023 IT 202300007278**

(43) Date of publication of application:
**16.10.2024 Bulletin 2024/42**

(73) Proprietors:
- **Tamburrino, Antonello**
  **84084 Fisciano (SA) (IT)**
- **Sardellitti, Alessandro**
  **03036 Isola del Liri (FR) (IT)**
- **Milano, Filippo**
  **86020 Pietracupa (CB) (IT)**
- **Ferrigno, Luigi**
  **84085 Mercato San Severino (SA) (IT)**
- **Laracca, Marco**
  **04023 Formia (LT) (IT)**
- **Ventre, Salvatore**
  **81030 Carinola (CE) (IT)**

(72) Inventors:
- **Tamburrino, Antonello**
  **84084 Fisciano (SA) (IT)**
- **Sardellitti, Alessandro**
  **03036 Isola del Liri (FR) (IT)**
- **Milano, Filippo**
  **86020 Pietracupa (CB) (IT)**
- **Ferrigno, Luigi**
  **84085 Mercato San Severino (SA) (IT)**
- **Laracca, Marco**
  **04023 Formia (LT) (IT)**
- **Ventre, Salvatore**
  **81030 Carinola (CE) (IT)**

(74) Representative: **Studio Torta S.p.A.**
**Via Viotti, 9**
**10121 Torino (IT)**

(56) References cited:
- YIN ET AL: "Thickness measurement of non-magnetic plates using multi-frequency eddy current sensors", NDT&E INTERNATIONAL, ELSEVIER, AMSTERDAM, NL, vol. 40, no. 1, 1 January 2007 (2007-01-01), pages 43 - 48, XP005696862, ISSN: 0963-8695, DOI: 10.1016/J.NDTEINT.2006.07.009
- LU MINGYANG ET AL: "A Novel Compensation Algorithm for Thickness Measurement Immune to Lift-Off Variations Using Eddy Current Method", IEEE TRANSACTIONS ON INSTRUMENTATION AND MEASUREMENT, IEEE, USA, vol. 65, no. 12, 1 December 2016 (2016-12-01), pages 2773 - 2779, XP011633463, ISSN: 0018-9456, [retrieved on 20161108], DOI: 10.1109/TIM.2016.2600918
- CARLSTEDT MATTHIAS ET AL: "Estimation of Lorentz Force From Dimensional Analysis: Similarity Solutions and Scaling Laws", IEEE TRANSACTIONS ON MAGNETICS, IEEE, USA, vol. 52, no. 8, 1 August 2016 (2016-08-01), pages 1 - 13, XP011617285, ISSN: 0018-9464, [retrieved on 20160718], DOI: 10.1109/TMAG.2016.2539927

EP 4 446 692 B1

- **FRANCOIS GUILLAUME ET AL: "Numerical Investigation of Eddy Current Losses in Airgap PCB Windings of Slotless BLDC Motors", 2018 21ST INTERNATIONAL CONFERENCE ON ELECTRICAL MACHINES AND SYSTEMS (ICEMS), KIEE EMECS (KIEE ELECTRICAL MACHINERY AND ENERGY CONVERSION SYSTEMS), 7 October 2018 (2018-10-07), pages 2702 - 2708, XP033451632, DOI: 10.23919/ ICEMS.2018.8549177**

## EP 4 446 692 B1

**Description**

This patent application claims priority from Italian patent application no. 102023000007278 filed on April 14, 2003.

TECHNICAL FIELD

The present solution relates to an eddy current multi-parameter measurement device and to a corresponding measurement method; in particular, the following discussion will make particular reference, without thereby losing generality, to the simultaneous measurement of at least two electrical, geometrical or magnetic physical quantities, for example thickness and electrical conductivity, of conductive objects, for example metal laminates.

BACKGROUND

The need is known, in particular in the industrial field, to perform thickness measurements for the purpose of production control. For example, the need is known to measure the thickness of metal laminates during processing of industrial components, so as to assure desired mechanical and/or safety requirements.

Furthermore, the need is known to measure the electrical conductivity of metal laminates, in particular following heat treatment processes; in fact, the electrical conductivity is associated with the properties and chemical composition of the material.

Measurements which are accurate and possibly performed in real time of the thickness and of the electrical conductivity of metal laminates thus play an important role in the improvement of the efficiency and of the production quality. Furthermore, the possibility of carrying out such measurements in-line is particularly advantageous, so as to be able to implement an automated control during production.

Known thickness measurement techniques generally envisage contact measurements, for example by means of thickness gauges or feelers.

Measurement techniques without physical contact with the component under measurement can be particularly advantageous in various fields of use, for example in the case where the component reaches high temperatures during the production process.

To this regard, measurements by means of ultrasound sensors with coupling in air have been proposed, which perform the measurements by means of the emission and reception of ultrasounds. In general, ultrasound techniques do not allow high accuracies in case of laminates with very thin thicknesses and furthermore such techniques are quite complex and expensive.

Other known solutions for non-contact measurement envisage use of lasers; such techniques are quite frequently implemented, but they too result to be complex and expensive.

Furthermore, non-destructive thickness measurement techniques have been proposed in literature, based on parasitic or induced currents (so called "Eddy currents").

In general, the operating principle of an eddy current measurement consists in using a coil which, when excited by an alternating-current electrical signal, induces parasitic (eddy) currents in the conductive object under test. The excitation coil or another coil (detection or pick-up coil) or another suitable sensor measures the magnetic reaction field due to the eddy current, which depends on the geometrical (for example to the thickness) and physical (for example to the electrical conductivity) characteristics of the object being tested.

W. Yin, A. J. Peyton, "Thickness measurement of non-magnetic plates using multi-frequency eddy current sensors", NDT&E International, vol. 40, n. 1, pp. 43-48, January 2007; and M. Lu, L. Yin, A. J. Peyton, W. Yin, "A Novel Compensation Algorithm for Thickness Measurement Immune to Lift-Off Variations Using Eddy Current Method", IEEE Trans. on Instrumentation and Measurement, vol. 65, n. 12, pp. 2773-2779, December 2016, disclose thickness measurement methods of flat conductive foils of non-magnetic material using eddy currents.

In particular, it is disclosed that the minimum frequency of the imaginary part of the inductance variation (or similarly, the maximum frequency of the real part of the impedance variation), which occurs when an eddy current sensor is arranged next to a non-magnetic metal sheet, with respect to the case where the sensor is positioned in air, is inversely proportional to the thickness of such sheet; such frequency can thus provide an indication, which can be directly associated with the thickness.

The methods known in-literature using eddy-current measurements are based, in general, on minimization problems. Solving of such problems requires minimization of a target function representative of the distance between the experimental measurements and the values derived from a numerical model, at an attempt value of the unknown quantity. These methods require a high number of measurements at different excitation frequencies for estimating, for example, an unknown thickness.

The use of a high number of frequencies for obtaining in an accurate manner the quantity of interest requires, in turn, high measurement times, which could not be compatible with in-line measurements, in real time or almost real time.

The present Applicant has thus realized that the solution described in the aforementioned articles, although promising, is not suitable for use in the industrial field, where the measurement quickness and the variability of measurement conditions are important factors to be considered.

Furthermore, to date, no solutions have been proposed which allow simultaneous measuring, with adequate performances in terms of measurement accuracy and quickness, of more physical, geometrical, magnetic or electrical quantities, of metal laminates (for example, in terms of thickness and electrical conductivity).

The aim of the present solution is, in general, to provide a measurement technique which enables overcoming the previously highlighted drawbacks of known solutions.

According to the present solution, a multi-parameter measurement device and a corresponding measurement method are thus provided, as described in the appended claims.

BRIEF DESCRIPTION OF THE DRAWINGS

In order to better understand the present solution, preferred embodiments thereof will now be described, by way of mere non-limiting example and with reference to the accompanying drawings, wherein:

- Figure 1 is a schematic block diagram of a multi-parameter measurement device according to an aspect of the present solution;
- Figure 2 is a more detailed diagram relative to a processing stage of the device of Figure 1;
- Figures 3A and 3B show the relative arrangement between a probe and a conductive object in the measurement device;
- Figures 4A-4D show adimensional curves representative of quantities associated with an impedance variation measured by the probe of the measurement device;
- Figure 5 shows the intersection of contour lines in an adimensional analysis plane;
- Figure 6 shows reliability and non-reliability regions associated with the multi-parameter measurement;
- Figures 7 and 8 show further intersections between contour lines associated with a representation on an adimensional plane and, respectively, on a dimensional plane; and
- Figure 9 is a flow diagram of operations associated with multi-parameter measurement by the measurement device.

DESCRIPTION OF EMBODIMENTS

As it will be described in details in the following, an aspect of the present solution envisages implementing a multi-parameter measurement technique by means of eddy currents for measurement of physical quantities, in particular for the simultaneous measurement of at least two geometrical, electrical and/or magnetic quantities, of a conductive object (such as a metal sheet or plate).

Such measurement technique is based, in general, on a dimensional analysis deriving from the Buckingham's theorem, also known as $\pi$ ("pi") theorem, as described for example in E. Buckingham, "On physically similar systems; illustrations of the use of dimensional equations," Phys. Rev., vol. 4, pp. 345-376, Oct 1914.

In a known manner, the Buckingham's theorem states that, since the physical laws are independent of the measurement units, any physical law can be described in terms of adimensional parameters (defined as "$\pi$ groups"); the theorem envisages a procedure for identifying such adimensional groups. The use of adimensional $\pi$ groups reduces the number of variables which describe the system, thus reducing the quantity of experimental or numerical data required for performing correlations between physical phenomena and the variables which describe the same physical phenomena.

A generic physical problem described by a number n of dependent and independent dimensional variables $q$ can be described by a relation of the type:

$$q_1 = g(q_2, q_3, \ldots, q_n),$$

where $q_1$ is a variable dependent on $q_2, q_3, \ldots, q_n$.

All the variables of the problem can be expressed as a function of $p$ adimensional $\pi$ groups: $\pi_1, \pi_2, \ldots, \pi_p$.

The number of $\pi$ groups ($p$) is defined as $p = (n - k)$, where $k$ is the number of fundamental dimensions required for describing the $n$ dimensional variables.

The $\pi$ groups are obtained based on the $n$ dimensional variables $q_1, q_2, q_3, \ldots, q_n$ in the following manner:

$$\pi_i = q_1^{\alpha i_1} \dots q_j^{\alpha i_j} \dots q_n^{\alpha i_n},$$

where the exponents $\alpha i_j$, with $i = 1, 2, \dots, p$ and $j = 1, 2, \dots, n,$ are rational numbers such that the $\pi_i$ groups are adimensional quantities.

In order to calculate the exponents $\alpha i_j$ for each adimensional parameter $\pi_i$, $k$ "repeated variables" are defined chosen among the $n$ dimensional variables $q_1, q_2, q_3, \dots, q_n$, having the function of "dominant" dimensions for the definition of the adimensional $\pi$ groups. Such repeated variables have to satisfy the following constraints: they must cover all the physical dimensions of the problem being analysed; they have to be independent of each other; their combination has not to generate an adimensional quantity; and they should not be dependent variables of the problem, if present.

The Buckingham's theorem thus guarantees that the relation which defines the physical problem can be expressed in terms of the adimensional $\pi$ groups, as:

$$\pi_1 = G(\pi_2, \pi_3, \dots, \pi_p).$$

The main advantage of the Buckingham's theorem is that of reducing the number of relevant variables of the problem from $n$ to $p$, being $p = (n - k)$, offering an important reduction in the amount of experimental or numerical data required for performing correlations between physical variables.

Another advantage offered by the Buckingham's theorem is that its application does not require any a priori knowledge of the laws relative to the main physical quantities, since it can be applied on the basis of the knowledge of the sole physical variables that describe a phenomenon.

As it will be described in the following, the present solution provides for the use of adimensional groups for estimating physical quantities, for example at the same time the thickness and the electrical conductivity, of conductive objects, such as metal sheets or laminates, with an approach that provides a high accuracy and is suitable for an estimation in-line (i.e. during a manufacturing process) and in real time.

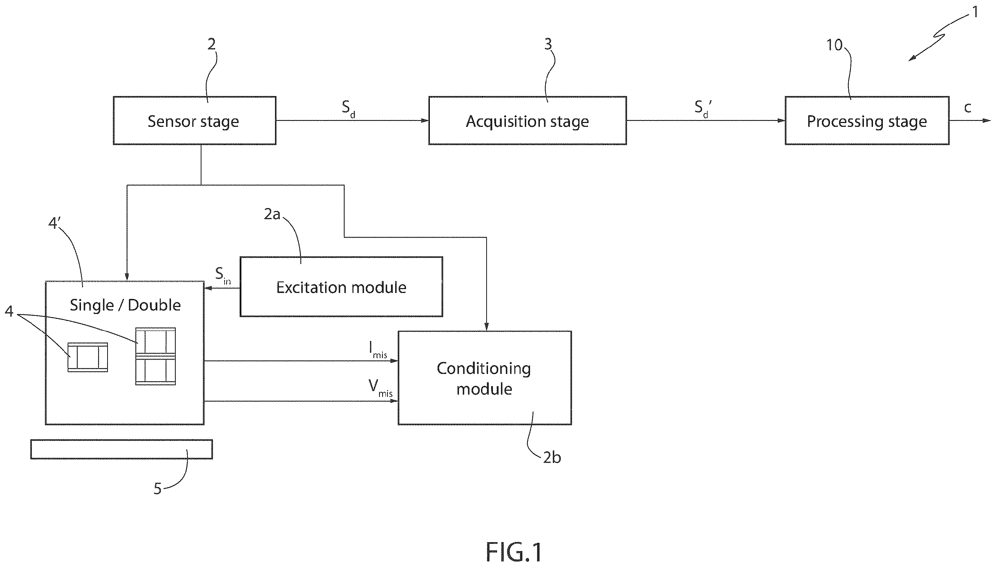

As is schematically illustrated in Figure 1, a thickness measurement device 1 according to an embodiment of the present solution comprises: a sensor stage 2, of the eddy currents type; an acquisition stage 3, coupled to the sensor stage 2; and a processing stage 10, coupled to the acquisition stage 3.

Specifically, the sensor stage 2 comprises a probe 4', configured to detect the magnetic reaction field due to induced eddy currents. In a possible embodiment, the probe 4' is provided with an air-core (wound in air) coil element 4, of the single type (having double function of signal excitation and detection) or double type (i.e. having, as in the illustrated case, a first excitation winding 4a and a second detection winding 4b).

Such coil element 4 is designed to be arranged, during operation, at a certain distance from a conductive object 5 being tested (or, alternatively, to be arranged in air); the conductive object 5, whose unknown quantities are to be determined (for example, thickness and conductivity), is for example a flat sheet of conductive, in particular metallic, for example non-magnetic, material.

The sensor stage 2 further comprises: an excitation module 2a, configured to provide an excitation signal $S_{in}$ to the probe 4' in order to evaluate its frequency response, in particular at a single or at more excitation frequencies; and a conditioning module 2b, configured to receive from the probe 4' one or more measurement signals, in the example a current signal, $I_{mis}$, and a voltage signal, $V_{mis}$, in response to the excitation from the excitation module 2a and to suitably process the measurement signals, for example by means of amplification and filtering, providing at the output corresponding detection signals $S_d$.

The acquisition stage 3 is configured to acquire such detection signals $S_d$ from the sensor stage 2, and in particular to carry out an analogue to digital conversion of the same signals.

The processing stage 10 receives the digital signals $S_d$', as a result of the aforementioned conversion, and is configured to carry out suitable signal processing operations, so as to simultaneously determine and provide at the output an estimation of more physical quantities associated with the conductive object 5, for example an indication of thickness and electrical conductivity of the conductive object 5.

Such estimation can, for example, be used by an external system (not illustrated) for implementing a production control, during the manufacturing procedure of the conductive object 5.

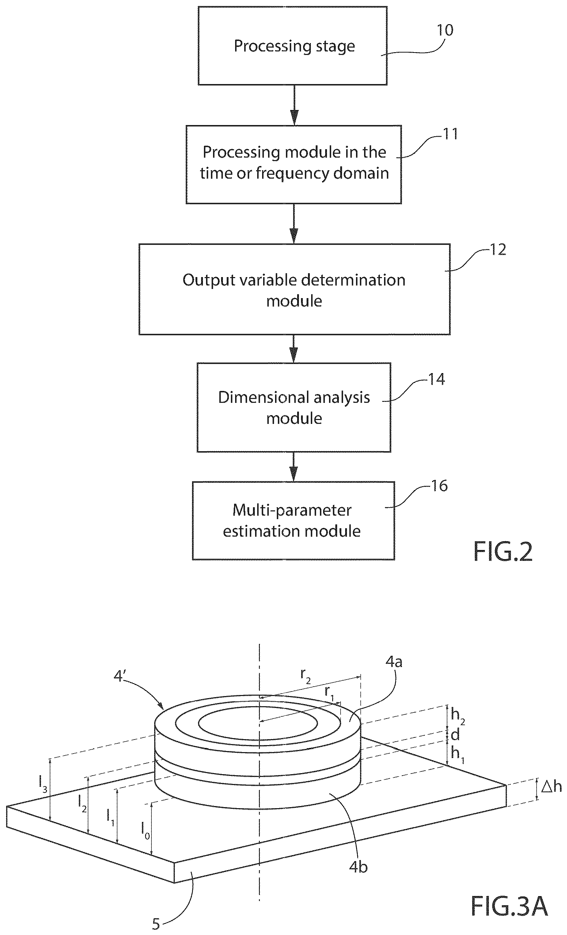

More specifically, and now referring to Figure 2, the processing stage 10 of the thickness measurement device 1 comprises a signal processing module 11, operating in the time or in the frequency domain, configured to receive the aforementioned digital signals $S_d$' and to carry out a frequency transform thereof, in particular an FFT (Fast Fourier Transform), or another suitable processing operation in the time or frequency domain.

The processing stage 10 further comprises an output-variable determination module 12, configured to determine, for example starting from the aforementioned frequency transform, an estimation of an output variable associated with the probe 4' and indicative of the magnetic reaction field due to the induced eddy currents.

In an embodiment, such output-variable determination module 12 is configured to determine an impedance variation $\Delta\textbf{Z}$, in particular a variation between mutual (or self-) impedance values developed between the excitation and detection windings 4a, 4b measured by the coil element 4 in air ($\dot{\textbf{Z}}_{m,a}$) and at the conductive object 5 ($\dot{\textbf{Z}}_{m,p}$), at every excitation frequency (or at a single excitation frequency).

As it will be described in details in the following, the processing stage 10 further comprises: a dimensional analysis module 14, configured to carry out a dimensional analysis based on the Buckingham's theorem; and a multi-parameter estimation module 16, configured to determine an estimation of physical quantities, for example a simultaneous estimation of the thickness and of the electrical conductivity, based on the results of the analysis carried out by the dimensional analysis module 14.

More specifically, application of the Buckingham's theorem to the physical system comprising the thickness measurement device 1 and the associated conductive object 5 will be now illustrated, considering as measurable output variable the aforementioned impedance variation $\Delta\textbf{Z}$.

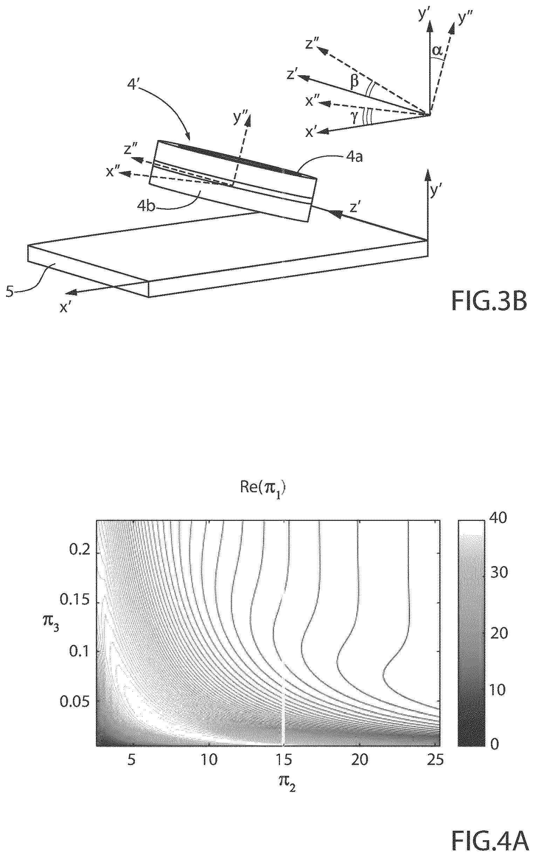

To this end, reference will also be made to Figures 3A and 3B, in which such quantities are shown in detail; in the illustrated example, the probe 4' comprises the excitation winding 4a (arranged at a greater distance from the conductive object 5) and the detection winding 4b (arranged at a smaller distance from the conductive object 5).

The quantities depending on the impedance variation $\Delta Z$ comprise in this example:

- the set of geometrical variables which describe the geometrical characteristics, of shape, position and dimensions, of the probe 4', for example, and referring to Figure 3A: internal radius $r_1$ and external radius $r_2$ of the excitation and detection windings 4a, 4b; height or thickness $h_1$, $h_2$ of the detection and excitation windings 4b, 4a; gap d between the aforementioned excitation and detection windings 4a, 4b (all the aforementioned geometrical variables are enclosed in an array of geometrical variables $\textbf{t}$);
- the angular frequency $\omega = 2\pi\textbf{f}$ of the excitation signal, being $\textbf{f}$ the frequency of the excitation signal;
- the geometrical and electrical variables which describe the physical properties of the conductive object 5, among which for example (reference is again made to Figure 3) the thickness $\Delta\textbf{h}$, the electrical conductivity $\sigma$ of the conductive plate, the magnetic permeability $\mu$ or magnetic reluctance $\textbf{v} = \textbf{1}/\mu$ ;
- the so-called lift-off $\textbf{l}_0$, defined as the distance between the conductive object 5 and the probe 4', in particular between the lower surface of the detection winding 4b and the upper surface of the conductive plate;
- the angular relations between the conductive object 5 and the probe 4', defined by the angles of mutual orientation ($\alpha$, $\beta$, $\gamma$), shown in detail in the aforementioned Figure 3B, defined between the axes of the detection systems x'y'z' and x"y"z" associated with the conductive object 5 and, respectively, the probe 4' (such orientation angles can be considered enclosed in an array of angular relations $\theta$).

Furthermore, a further parameter $\textbf{D}$ is introduced, called characteristic length, which identifies the greater dimension that describes the probe 4' (in the specific example, corresponding to the aforementioned external radius $r_2$).

The function that links the aforementioned quantities to the output variable, $\Delta\textbf{Z}$, can be expressed as:

$$\Delta Z = \dot{Z}_{m,p} - \dot{Z}_{m,a} = g(\sigma, v, \omega, \Delta h, l_0, D, \textbf{t}, \boldsymbol{\theta})\,.$$

The number of variables can be reduced by applying the Buckingham's theorem, discussed in the foregoing, which allows representing the described quantities in terms of adimensional groups.

Specifically, the aforementioned function involves a total of nine variables ($\textbf{n = 9}$), of which one dependent variable ($\Delta\textbf{Z}$) and eight independent variables; in particular, seven variables have a scalar nature and two have a array nature ($\textbf{t}$, $\theta$).

All the variables can be expressed in terms of three fundamental dimensions (k=3), for example length $\textbf{L}$, time $\textbf{T}$ and impedance $\Omega$.

The Buckingham's theorem allows obtaining in this system six adimensional groups, $\textbf{p = (n - k) = 6}$, according to the following functional relation:

$$\pi_1 = G(\pi_2, \pi_3, \pi_4, \boldsymbol{\pi}_5, \boldsymbol{\pi}_6)\,.$$

In order to calculate these adimensional groups $\pi$, the chosen repeated variables can be the magnetic reluctance $\textbf{v}$ (given by the product between the vacuum magnetic reluctance, $\textbf{v}_0$, and the relative magnetic reluctance, $\textbf{v}_r$), the angular frequency $\omega$ and the aforementioned characteristic length $\textbf{D}$.

By applying the procedure provided by the Buckingham's theorem, the adimensional groups $\pi$ can thus be expressed in the following manner:

$$\pi_1 = \Delta Z v \,/\, \omega D \, ;$$

$$\pi_2 = \sigma \omega D^2 / v \, ;$$

$$\pi_3 = \Delta h / D \, ;$$

$$\pi_4 = l_0 / D \, ;$$

$$\boldsymbol{\pi_5 = t/D} \, ;$$

$$\boldsymbol{\pi_6 = \theta} \, .$$

Each adimensional variable of the problem is by itself an adimensional group; for this reason, the array of angular relations $\boldsymbol{\theta}$, which is adimensional, has been associated with the adimensional group $\pi_6$.

The aforementioned functional relation which describes the system being analysed can thus be rewritten in the following manner:

$$\Delta Z v \,/\, \omega D = G(\sigma \omega D^2 / v, \Delta h / D, l_0 / D, \boldsymbol{t}/D, \boldsymbol{\theta}) \, .$$

In particular, in such functional relation:

- the group $\pi_1$, besides being correlated to the used excitation angular frequency $\omega$ and to the geometry of the probe 4' (by means of the aforementioned characteristic length $\boldsymbol{D}$), is correlated to the output variable, i.e. to the impedance variation $\Delta \boldsymbol{Z}$, associated in this example with the difference between the mutual impedance measured by the coil element 4 at the conductive object 5 ($\dot{\boldsymbol{Z}}_{m,p}$) and the one measured in air ($\dot{\boldsymbol{Z}}_{m,a}$);
- the group $\pi_2$ is correlated to the electrical conductivity $\sigma$ (unknown and which is to be estimated) of the conductor, to the used excitation frequency, to the magnetic permeability and again to the geometry of the probe 4';
- the group $\pi_3$ is correlated to the thickness $\Delta \boldsymbol{h}$ (unknown and which is to be estimated) of the conductive object 5 and again to the geometry of the probe 4'.

The groups $\pi_4$, $\pi_5$, $\pi_6$ are relative to the sole geometry of the probe 4' and to the positional relation between the probe 4' and the conductive object 5.

Considering that the aim in this example is to define a methodology for measuring the thickness and the electrical conductivity, once the characteristics of the probe 4' have been defined, the groups $\pi_4$, $\pi_5$, $\pi_6$ have no relevance in this case since they are fixed; the groups $\pi_1$, $\pi_2$, $\pi_3$ are on the contrary the adimensional groups to be investigated, linked to the output variable (in this case, mutual impedance, which can be measured in real or almost real time), to the unknown thickness and to the unknown electrical conductivity, respectively.

Consequently, the aforementioned functional relation can be simplified as $\pi_1 = G(\pi_2, \pi_3)$, namely:

$$\Delta Z v \,/\, \omega D = G(\sigma \omega D^2 / v, \Delta h / D) \, .$$

Since the impedance variation $\Delta \boldsymbol{Z}$ is a complex quantity, also the group $\pi_1$ is a complex quantity, whereas $\pi_2$, $\pi_3$

are real numbers. Different representations of the function $\pi_1 = G(\pi_2, \pi_3)$ can thus be analysed, in particular determining the following quantities thereof: the real component **Re($\pi_1$)**, the imaginary component **Im($\pi_1$)**, the phase $\Phi(\pi_1)$ and the module $|\pi_1|$.

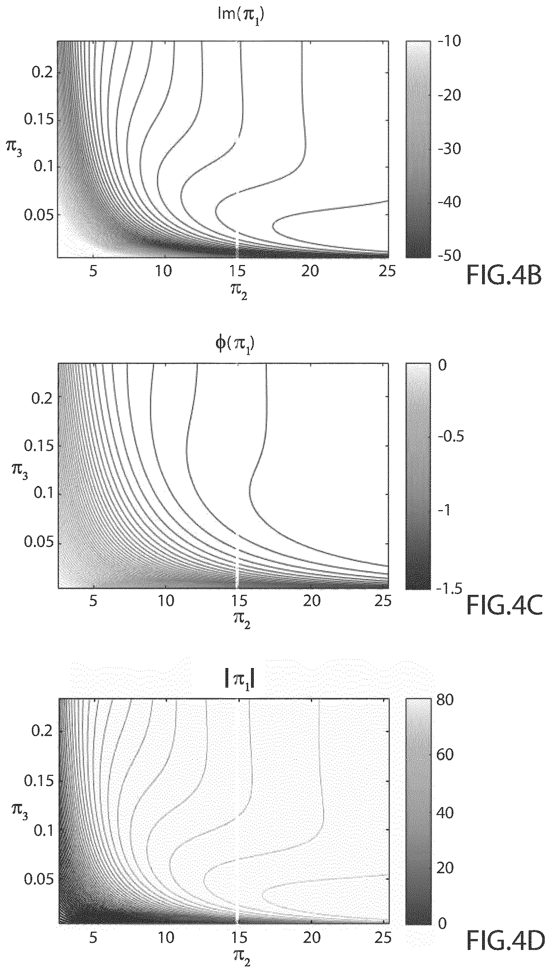

Figures 4A-4D show contour maps of the real component **Re($\pi_1$)**, of the imaginary component **Im($\pi_1$)**, of the phase $\Phi(\pi_1)$ and of the module $|\pi_1|$, respectively, of the aforementioned group $\pi_1$, as a function of the groups $\pi_2$ and $\pi_3$, represented on the x and, respectively y, axes of the adimensional analysis plane.

In particular, as it will be discussed in the following, the represented adimensional curves can be obtained by means of simulations of the system, referred to intervals of thickness and electrical conductivity of interest, performed in a step of initialization of the measurement system (prior to carrying out, in real or almost real time, the measurements of the quantities of interest, in the example of thickness and conductivity).

For example, considering, without thereby implying a lack of generality, a planar case study, the semi-analytical model described in C. V. Dodd, W. E. Deeds, "Analytical Solutions to Eddy-Current Probe-Coil Problems", Journal of Applied Physics, vol. 39, n. 6, pp. 2829-2838, May 1968, can be used for evaluating the impedance variation $\Delta$**Z**, once the characteristics of the probe 4' and the further geometrical and electrical parameters of the system have been defined.

In particular, considering as fixed the geometrical, magnetic and electrical parameters, the group $\pi_1$ depends on the simulated value of $\Delta$**Z** normalized with respect to the considered angular frequency $\omega$; the group $\pi_2$ depends on the chosen (and fixed) values of the product $\sigma\omega$; and the group $\pi_3$ depends on the chosen (and fixed) values of the thickness $\Delta$**h**.

Therefore, by varying the product $\sigma\omega$, for example by varying the frequency excitation, and the thickness $\Delta$**h** of the conductive plate in an interval of values of interest and by applying the simulation tool for the evaluation of $\Delta$**Z**, different values of the three adimensional groups $\pi_1, \pi_2, \pi_3$ can be obtained. In particular, through simulation, different values of **Re($\pi_1$)**, **Im($\pi_1$)**, $\Phi(\pi_1)$ and $|\pi_1|$ of the aforementioned group $\pi_1$ can be obtained, for the definition of corresponding adimensional curves in the maps shown in the aforementioned Figures 4A-4D.

During the measuring phase (carried out, as indicated in the foregoing, in real or almost real time) the aforementioned contour maps can be exploited for the simultaneous estimation of the quantities of interest of the conductive object 5, for example of the thickness and of the electrical conductivity.

In particular, each quantity measured for the impedance variation $\Delta$**Z** (real component **Re($\pi_1$)**, imaginary component **Im($\pi_1$)**, phase $\Phi(\pi_1)$ and module $|\pi_1|$) corresponds to a particular curve among those obtained experimentally (and shown in the aforementioned Figures 4A-4D).

The method thus provides for the estimation of the thickness $\Delta$**h** of the conductive object 5 and of the corresponding electrical conductivity $\sigma$ by means of the intersection of the contour lines (previously obtained through simulation), which are selected based on the measured values.

In particular, considering the four different representations of adimensional curves, for each single excitation frequency, and kept into account that the electrical conductivity $\sigma$ is fixed, although unknown, the four curves can be superimposed on one single adimensional plane.

The superimposition of the curves generates a point of intersection having coordinates on the x axis referred to the group $\pi_2$ and consequently to the electrical conductivity $\sigma$ (the angular excitation frequency $\omega$ being known); and on the y axis referred to the group $\pi_3$ and thus to the thickness $\Delta$**h**.

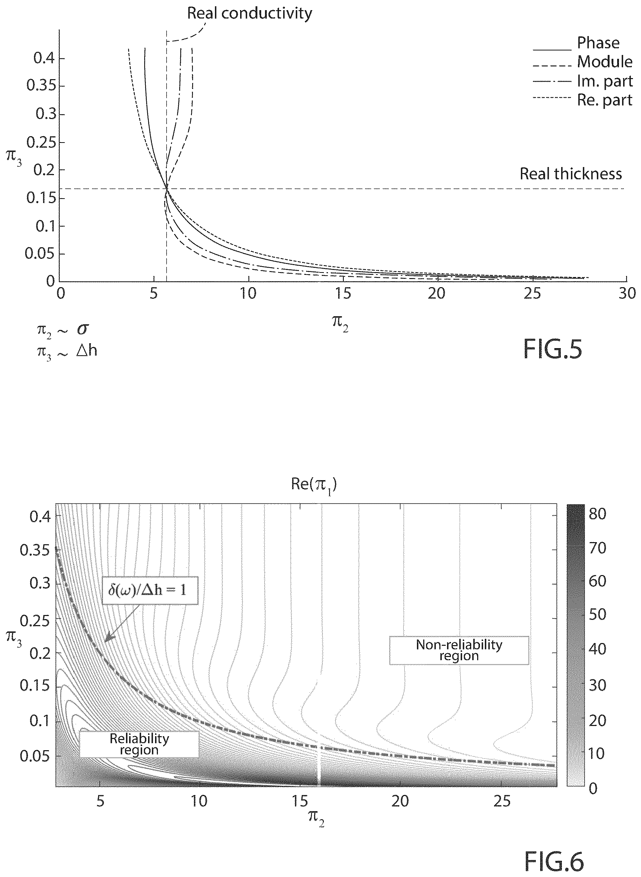

As shown in Figure 5, it is thus possible to obtain the values of the two parameters of interest by making a single measurement also at a single excitation frequency, based on the intersection of the corresponding contour lines for the measured quantities (in this case, real component and imaginary component, phase and module) for the impedance variation $\Delta$**Z**.

The choice of the value of the excitation frequency, at which to perform the measurement, can, for example, be a compromise between the need to use a high excitation frequency for improving the quality of the estimation of electrical conductivity $\sigma$ and the counterposed need to use a frequency with a sufficiently reduced value for enabling the eddy currents to penetrate inside the thickness of the conductive object 5 (and thus improve the quality of the estimation of the thickness $\Delta$**h**).

To this regard, a skin depth parameter $\delta$ can be defined as:

$$\delta = \sqrt{\frac{2v}{\omega\sigma}},$$

and a condition can further be defined which has to be respected by the value of such parameter $\delta$ for satisfying the aforementioned compromise, namely: $\delta > k \cdot \Delta$**h**, where **k** is a number greater or equal to one.

It is easy to show that the aforementioned condition can be rewritten as:

$$\frac{1}{\pi_3 \pi_2} > k \, .$$

Considering as an application example the adimensional curve referred to the real component $Re(\pi_1)$ of the impedance variation $\Delta\mathbf{Z}$, the described constraint identifies a curve (shown in dashed line in Figure 6, in the example k is set equal to one) which delimits at the bottom a reliability region of the measurements; in other words, it is required that the aforementioned point of intersection for simultaneously estimating both the thickness $\Delta\mathbf{h}$ and the electrical conductivity $\sigma$ of the material being tested is found in such reliability region.

In the case more measurements are performed at more frequency values, since the thickness $\Delta\mathbf{h}$ does not change, the place of the points defined by the intersection of the different contour lines represents a horizontal line, with constant value on the y axis and, therefore, parallel to the x axis.

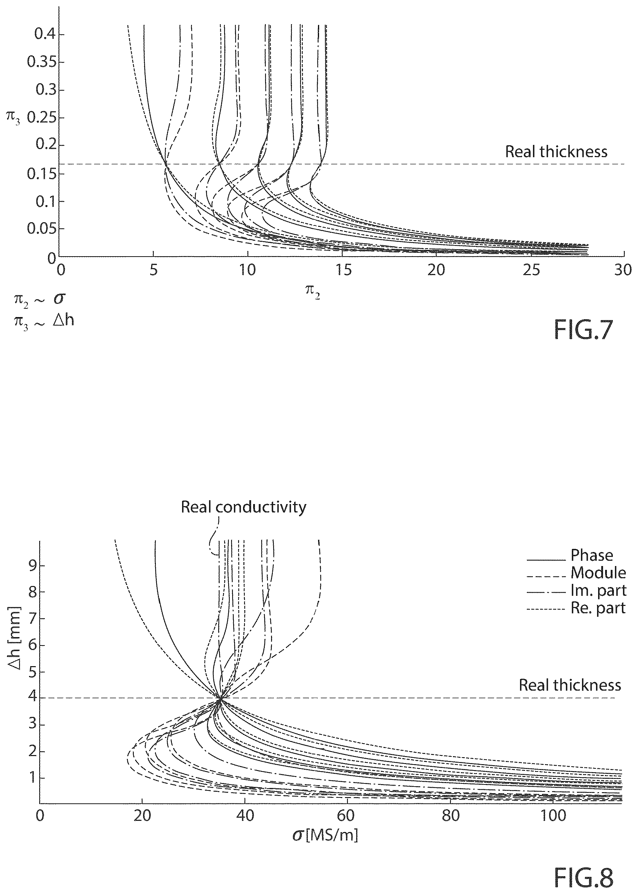

For example, Figure 7 represents the intersections defined by the respective adimensional curves in the case of measurements performed at five different excitation frequencies (five points of intersection are thus present).

Referring to the x and y axes in relation to the electrical conductivity $\sigma$ and the thickness $\Delta\mathbf{h}$, respectively, it is possible to obtain one single point of intersection, as is shown in Figure 8, having the x coordinate directly indicative of the electrical conductivity $\sigma$ and the y coordinate directly indicative of the thickness $\Delta\mathbf{h}$.

It is thus highlighted that the discussed solution advantageously enables identifying the point of intersection for the simultaneous estimation of thickness $\Delta\mathbf{h}$ and electrical conductivity $\sigma$ of the material being tested, also by using a single excitation frequency approach. The use of more excitation frequencies can anyway enable improving the accuracy of the estimated parameters.

Furthermore, it is highlighted that, in order to obtain the aforementioned intersection, an even smaller number of the aforementioned measured quantities for the impedance variation $\Delta\mathbf{Z}$ can be used. For example, only two measured quantities (for example the real component $Re(\pi_1)$ and the imaginary component $Im(\pi_1)$) can be used, in case a single excitation frequency approach is adopted; or also only one measured quantity (for example only the real component $\mathbf{Re}(\mathbf{\pi_1})$) can be used, in case a multi-frequency measurement approach is adopted.

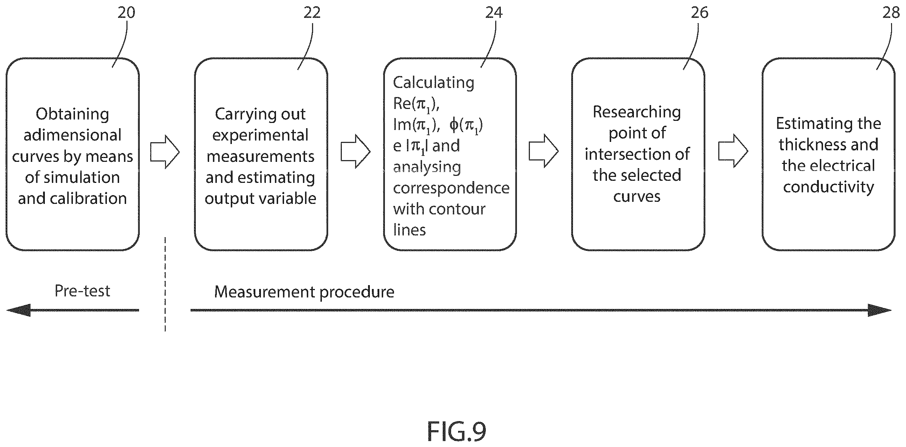

Referring to Figure 9, it is now possible to summarize the operations for the simultaneous measurement of more physical quantities, for example electrical, magnetic and/or geometrical quantities, by means of eddy currents and the aforementioned dimensional analysis.

As discussed above, a first step, denoted by 20, of initialization of the system envisages carrying out off-line simulations aimed at obtaining the adimensional curves relative to the probe 4' and to the analysable intervals of the parameters of interest (for example thickness and electrical conductivity).

Such step is preliminary to the actual step of measuring the conductive object 5 and can be also carried out only once in a pre-test phase (since it has to be repeated only in the case where the measurement conditions change, for example with respect to the characteristics of the probe 4'); the length of such preliminary step does not thus constitute a problem for the in-line execution the following measurements.

According to a possible aspect of the present solution, during the aforementioned preliminary step (carried out off-line) a calibration step can be further implemented.

The aim of such calibration step is to verify the correspondence or matching between simulation and data obtained experimentally, so as to prevent errors due, for example, to the adopted simulation model, uncertainty in the knowledge of the geometrical and physical characteristics of the probe 4', experimental noise, measurement uncertainty.

In particular, the calibration may envisage carrying out experimental measurements on a certain number of reference samples (for example, conductive plates with known electrical conductivity and thickness) and the corresponding execution of the numerical simulations, for each one of the excitation frequencies used for generating the simulated adimensional curves.

Following such operations, it is possible to determine a calibration factor **"c"**, as a ratio between simulated numerical results and experimental results obtained on reference samples (having known geometrical and electrical parameters) for each frequency considered:

$$c(f) = \frac{\Delta Z_{sim}(f)}{\Delta Z_{exp}(f)},$$

where $\Delta\mathbf{Z_{sim}}$ indicates the values of mutual impedance variation obtained by means of simulation and $\Delta\mathbf{Z_{exp}}$ indicates the corresponding values obtained by means of experimental measurements on the reference samples.

The actual measurement procedure is subsequently (in a distinct time) carried out in-line (in real or almost real time) on an unknown measurement object 5, of which the parameters of interest are not known (for example, of which there are no indications concerning the thickness or the electrical conductivity).

Specifically, such procedure envisages, as indicated in step 22, execution of the experimental measurements with consequent estimation of the output variable, for example of the impedance variation $\Delta Z$, at a determined excitation frequency.

The procedure then envisages, step 24, determining the measured quantities associated with the impedance variation $\Delta Z$ (real component $Re(\pi_1)$, imaginary component $Im(\pi_1)$, phase $\Phi(\pi_1)$ and module $|\pi_1|$) and matching the obtained values with the adimensional curves (contour lines) obtained in the simulation phase. In particular, as discussed in the foregoing, the values obtained for the aforementioned measured amounts correspond to respective contour lines among those obtained through simulation.

Subsequently, step 26, the point of intersection of the selected contour lines is determined and the consequent estimation of the parameters of interest is carried out. In such step 26, also a step of verifying the reliability of the performed estimation can be carried out, for example by verifying that the performed estimation falls within the reliability region of the measurements (as discussed in the foregoing).

The aforementioned steps 24 and 26 can be possibly repeated for further values of excitation frequency (in the case, for example, where the non-reliability of the previously performed measurement is verified or in the case where it is desired to repeat the measurements at more excitation frequencies for improving the quality of the estimations).

In any case, at following step 28, the final simultaneous estimation of the quantities of interest of the conductive object 5 is performed, for example of the corresponding thickness $\Delta h$ and of the corresponding electrical conductivity $\sigma$.

The estimated values can be further provided at the output to an external system for implementing a control of production with respect to the conductive object 5 (in a manner not specifically illustrated herein).

Based on what discussed above, the advantages that the present solution allows to obtain are evident.

In particular, the proposed solution enables to simultaneously measure more physical parameters of a conductive object, such as a metal laminate, for example the thickness and the electrical conductivity, by means of the use of non-destructive eddy current techniques, in particular without using coupling materials.

As compared to eddy current techniques known to date and present in literature, the proposed solution has significant advantages with respect to the signal processing methodology, which allow obtaining measurements in short time with accuracy in line with industrial requirements and without the need of a priori knowledge of nominal characteristics of the element being the object of measurement.

For example, the present Applicant has verified the possibility to obtain accuracies on the estimation of the thickness below 4% (in a range of measurable thicknesses for example comprised between 0.05 and 5 mm); and accuracies on the estimation of the electrical conductivity below 5%.

As compared to known type techniques, the proposed solution of dimensional analysis based on the application of the Buckingham's theorem is not based on minimization methods; this allows an important reduction in the measurement time (with similar performances), since it entails a reduction in the analysable excitation frequencies (even with the possibility of using one single excitation frequency).

Finally, it is clear that modifications and variations can be made to what described and illustrated herein, without thereby departing from the scope of the present solution, as defined in the appended claims.

In particular, it is highlighted that the proposed solution can be applied for the estimation also of one single quantity of interest, associated with a given adimensional group, the quantity of the other used adimensional group being known.

Furthermore, it is again highlighted that the described method can be applied regardless of the type of probe 4', for example a single winding probe (operating both for excitation and detection) or a double winding probe, or a probe consisting of a magnetic field sensor. Also the output variable, object of the measurements in real time and of the described dimensional analysis, could be different, being, for example, self-impedance (in the case of single winding probe) or, generically, a variation of detected magnetic field.

Furthermore, as already mentioned, it is highlighted that also the parameters to be estimated could be different than what described in the foregoing; for example, lift-off of the probe 4' could be estimated with respect to the conductive plate (simultaneously, for example, with the electrical conductivity or the thickness), or the magnetic permeability of the material could be estimated.

In such case, in an evident manner, also the adimensional group to be analysed in the implementation of the Buckingham's theorem could consequently change (in the case of the lift-off, for example, the aforementioned group $\pi_4 = l_0/D$).

It is further highlighted that the described solution can be used for any application, in particular industrial, in which it is required to simultaneously measure geometrical and/or physical parameters of a conductive sample of any geometrical shape.

**Claims**

**1.** An eddy current multi-parameter measurement device (1) for estimation of physical quantities of a conductive object (5), comprising:

a sensor stage (2), configured to generate eddy currents in the conductive object (5) and comprising a probe (4') configured to be arranged at a certain distance from the conductive object (5) and provide detection signals ($S_d$) associated with a magnetic reaction field due to said eddy currents; and
a processing stage (10), configured to carry out processing operations based on the detection signals ($S_d$) in order to provide an estimation of physical quantities of the conductive object (5),
wherein said processing stage (10) is configured to provide said estimation by means of a dimensional analysis method based on the Buckingham's theorem.

2. The device according to claim 1, wherein said processing stage (10) is configured to: determine values associated with an output variable ($\Delta Z$), being a function of said detection signals ($S_d$), by means of experimental measurements; provide a simultaneous estimation of at least two physical quantities based on the analysis of a correspondence between the determined values associated with the output variable ($\Delta Z$) and adimensional curves representing relations between the at least two physical quantities and said output variable ($\Delta Z$) obtained by means of numerical simulation in an off-line phase, in a time preceding said experimental measurements.

3. The device according to claim 2, wherein the physical quantities are geometrical, electrical or magnetic quantities of said conductive object (5), comprising: thickness ($\Delta h$); electrical conductivity ($\sigma$); magnetic permeability ($\mu$); distance ($l_0$) relative to said probe (4').

4. The device according to claim 2 or 3, wherein said processing stage (10) is configured, for application of the Buckingham's theorem, to: determine at least three adimensional groups ($\pi_1$, $\pi_2$, $\pi_3$) associated with a system consisting of said probe (4') and said conductive object (5), of which a first adimensional group ($\pi_1$) is associated with said output variable ($\Delta Z$) and a second ($\pi_2$) and a third ($\pi_3$) adimensional groups are associated with a respective one of said two physical quantities; and determine said adimensional curves, representing relations between said adimensional groups, in said off-line simulation phase.

5. The device according to claim 4, wherein said adimensional curves are contour lines in an adimensional analysis plane, which describe the trend of said first adimensional group ($\pi_1$) as a function of said second ($\pi_2$) and third ($\pi_3$) adimensional groups.

6. The device according to claim 4 or 5, wherein said output variable ($\Delta Z$) associated with said first adimensional group ($\pi_1$) is an impedance variation occurring when said probe (4') is positioned at the object (5) as compared to when it is positioned in air; and said two physical quantities associated with said second ($\pi_2$) and third ($\pi_3$) adimensional groups are a thickness ($\Delta h$) and, respectively, an electrical conductivity ($\sigma$) of said conductive object (5).

7. The device according to claim 6, wherein said processing stage (10) is configured to: select a number of said adimensional curves as a function of respective determined values associated with the output variable ($\Delta Z$); and provide said estimation on the basis of points of intersection of the selected adimensional curves in the analysis plane, wherein said second ($\pi_2$) and, respectively, third ($\pi_3$) adimensional groups are represented on the x and y axes and wherein said first adimensional group ($\pi_1$) defines a value associated with said adimensional curves.

8. The device according to claim 7, wherein said adimensional curves are representative of different quantities associated with said output variable ($\Delta Z$), comprising one or more of: real component $\mathbf{Re(\pi_1),}$ imaginary component $\mathbf{Im(\pi_1),}$ phase $\Phi(\pi_1)$ and module $|\pi_1|$.

9. The device according to any one of claims 7-8, wherein said processing stage (10) is configured to: define a reliability condition that links said second ($\pi_2$) and third ($\pi_3$) adimensional groups; and verify that the points of intersection for the simultaneous estimation of said two physical quantities meet said reliability condition.

10. The device according to any one of claims 2-9, wherein said processing stage (10) is configured to: determine the values associated with the output variable ($\Delta Z$) at different excitation frequencies ($f$) of said probe (4') in the generation of said eddy currents; and determine the correspondence between the values associated with the output variable ($\Delta Z$) and the adimensional curves, for each value of said excitation frequency ($f$).

11. The device according to any one of claims 2-10, wherein said processing stage (10) is configured to: during said off-line phase, determine a calibration factor ($c$), as a ratio between values associated with said output variable ($\Delta Z$)

estimated by simulation and values measured experimentally; and apply said calibration factor (*c*) to said experimental measurements.

12. An eddy current multi-parameter measurement method (1) for estimation of physical quantities of a conductive object (5), comprising:

generating eddy currents in the conductive object (5) and providing detection signals ($S_d$) associated with a magnetic reaction field due to said eddy currents, by means of a probe (4') configured to be arranged at a certain distance from the conductive object (5); and

carrying out processing operations based on the detection signals ($S_d$) in order to provide an estimation of physical quantities of the conductive object (5),

wherein carrying out processing operations comprises implementing a dimensional analysis method based on the Buckingham's theorem.

13. The method according to claim 12, wherein carrying out processing operations comprises: determining values associated with an output variable ($\Delta\mathbf{Z}$), being a function of said detection signals ($S_d$), by means of experimental measurements; providing a simultaneous estimation of at least two physical quantities on the basis of the analysis of a correspondence between the determined values associated with the output variable ($\Delta\mathbf{Z}$) and adimensional curves representing relations between the at least two physical quantities and said output variable ($\Delta\mathbf{Z}$), obtained by means of numerical simulation in an off-line phase, in a time preceding said experimental measurements.

14. The method according to claim 13, wherein the physical quantities are geometrical, magnetic or electrical quantities of said conductive object (5), comprising: thickness ($\Delta\mathbf{h}$); electrical conductivity ($\sigma$); magnetic permeability ($\mu$); distance ($\mathbf{l}_0$) from said probe (4').

15. The method according to claim 13 or 14, wherein carrying out processing operations comprises, for application of the Buckingham's theorem: determining at least three adimensional groups ($\pi_1$, $\pi_2$, $\pi_3$) associated with a system consisting of said probe (4') and said conductive object (5), of which a first adimensional group ($\pi_1$) is associated with said output variable ($\Delta\mathbf{Z}$) and a second ($\pi_2$) and a third ($\pi_3$) adimensional groups are associated with a respective one of said two physical quantities; and determining said adimensional curves representing relations between said adimensional groups in said off-line simulation phase; wherein said adimensional curves are contour lines that describe the trend of said first adimensional group ($\pi_1$) as a function of said second ($\pi_2$) and third ($\pi_3$) adimensional groups.

**Patentansprüche**

1. Wirbelstrom-Mehrparameter-Messvorrichtung (1) zum Schätzen physikalischer Größen eines leitfähigen Objekts (5), umfassend:

eine Sensorstufe (2), die dazu konfiguriert ist, Wirbelströme in dem leitfähigen Objekt (5) zu erzeugen und eine Sonde (4') umfasst, die dazu konfiguriert ist, in einem bestimmten Abstand von dem leitfähigen Objekt (5) angeordnet zu sein und Detektionssignale ($S_d$) bereitzustellen, die einem magnetischen Reaktionsfeld aufgrund der Wirbelströme zugeordnet sind; und

eine Verarbeitungsstufe (10), die dazu konfiguriert ist, Verarbeitungsvorgänge auf der Grundlage der Detektionssignale ($S_d$) durchzuführen, um eine Schätzung physikalischer Größen des leitfähigen Objekts (5) bereitzustellen,

wobei die Verarbeitungsstufe (10) konfiguriert ist, um die Schätzung mittels eines Dimensionsanalyseverfahrens auf Grundlage des Buckingham-Theorems bereitzustellen.

2. Vorrichtung nach Anspruch 1, wobei die Verarbeitungsstufe (10) konfiguriert ist, um: Werte, die einer Ausgangsvariablen ($\Delta Z$) zugeordnet sind, die eine Funktion der Detektionssignale ($S_d$) ist, mittels experimenteller Messungen zu bestimmen; eine gleichzeitige Schätzung von mindestens zwei physikalischen Größen auf der Grundlage der Analyse einer Entsprechung zwischen den bestimmten Werten, die der Ausgangsvariablen ($\Delta Z$) zugeordnet sind, und adimensionaler Kurven, die Beziehungen zwischen den mindestens zwei physikalischen Größen und der Ausgangsvariablen ($\Delta Z$) darstellen, die mittels numerischer Simulation in einer Offline-Phase in einer Zeit vor den experimentellen Messungen erhalten wurden, bereitzustellen.

3. Vorrichtung nach Anspruch 2, wobei die physikalischen Größen geometrische, elektrische oder magnetische Größen des leitfähigen Objekts (5) sind, umfassend: Dicke ($\Delta h$); elektrische Leitfähigkeit ($\sigma$); magnetische Permeabilität ($\mu$); Abstand ($l_0$) relativ zur Sonde (4').

4. Vorrichtung nach Anspruch 2 oder 3, wobei die Verarbeitungsstufe (10) zur Anwendung des Buckingham-Theorems konfiguriert ist, um: mindestens drei adimensionale Gruppen ($\pi_1$, $\pi_2$, $\pi_3$) zu bestimmen, die einem System bestehend aus der Sonde (4') und dem leitfähigen Objekt (5) zugeordnet sind, von denen eine erste adimensionale Gruppe ($\pi_1$) der Ausgangsvariablen ($\Delta Z$) zugeordnet ist und eine zweite ($\pi_2$) und eine dritte ($\pi_3$) adimensionale Gruppe jeweils einer der zwei physikalischen Größen zugeordnet sind; und um die adimensionalen Kurven, die Beziehungen zwischen den adimensionalen Gruppen darstellen, in der Offline-Simulationsphase zu bestimmen.

5. Vorrichtung nach Anspruch 4, wobei die adimensionalen Kurven Konturlinien in einer adimensionalen Analyseebene sind, die den Verlauf der ersten adimensionalen Gruppe ($\pi_1$) als Funktion der zweiten ($\pi_2$) und dritten ($\pi_3$) adimensionalen Gruppe beschreiben.

6. Vorrichtung nach Anspruch 4 oder 5, wobei die Ausgangsvariable ($\Delta Z$), die der ersten adimensionalen Gruppe ($\pi_1$) zugeordnet ist, eine Impedanzvariation ist, die auftritt, wenn die Sonde (4') am Objekt (5) positioniert ist, im Vergleich dazu, wenn sie in die Luft positioniert ist; und die zwei physikalischen Größen, die der zweiten ($\pi_2$) und der dritten ($\pi_3$) adimensionalen Gruppe zugeordnet sind, eine Dicke ($\Delta h$) bzw. eine elektrische Leitfähigkeit ($\sigma$) des leitfähigen Objekts (5) sind.

7. Vorrichtung nach Anspruch 6, wobei die Verarbeitungsstufe (10) konfiguriert ist, um: eine Anzahl der adimensionalen Kurven als Funktion jeweiliger bestimmter Werte, die der Ausgangsvariablen ($\Delta Z$) zugeordnet sind, auszuwählen; und die Schätzung auf der Grundlage von Schnittpunkten der ausgewählten adimensionalen Kurven in der Analyseebene bereitzustellen, wobei die zweite ($\pi_2$) bzw. dritte ($\pi_3$) adimensionale Gruppe auf der x- und y-Achse dargestellt sind und wobei die erste adimensionale Gruppe ($\pi_1$) einen Wert definiert, der den adimensionalen Kurven zugeordnet ist.

8. Vorrichtung nach Anspruch 7, wobei die adimensionalen Kurven repräsentativ für verschiedene Größen sind, die der Ausgangsvariablen ($\Delta Z$) zugeordnet sind, umfassend eine oder mehrere von: Realkomponente $Re(n_1)$, Imaginärkomponente $Im(\pi_1)$, Phase $\Phi(\pi_1)$ und Modul $|\pi_1|$.

9. Vorrichtung nach einem der Ansprüche 7-8, wobei die Verarbeitungsstufe (10) konfiguriert ist, um: eine Zuverlässigkeitsbedingung zu definieren, die die zweite ($\pi_2$) und dritte ($\pi_3$) adimensionale Gruppe verbindet; und zu verifizieren, dass die Schnittpunkte für die gleichzeitige Schätzung der zwei physikalischen Größen die Zuverlässigkeitsbedingung erfüllen.

10. Vorrichtung nach einem der Ansprüche 2-9, wobei die Verarbeitungsstufe (10) konfiguriert ist, um: die Werte zu bestimmen, die der Ausgangsvariablen ($\Delta Z$) bei unterschiedlichen Anregungsfrequenzen (f) der Sonde (4') bei der Erzeugung der Wirbelströme zugeordnet sind; und die Entsprechung zwischen den Werten, die der Ausgangsvariablen ($\Delta Z$) zugeordnet sind, und den adimensionalen Kurven für jeden Wert der Anregungsfrequenz (f) zu bestimmen.

11. Vorrichtung nach einem der Ansprüche 2-10, wobei die Verarbeitungsstufe (10) konfiguriert ist, um: während der Offline-Phase einen Kalibrierungsfaktor ($c$) als ein Verhältnis zwischen Werten, die der Ausgangsvariablen ($\Delta Z$) zugeordnet sind, die durch Simulation geschätzt werden, und experimentell gemessenen Werten zu bestimmen; und den Kalibrierungsfaktor ($c$) auf die experimentellen Messungen anzuwenden.

12. Wirbelstrom-Mehrparameter-Messverfahren (1) zum Schätzen physikalischer Größen eines leitfähigen Objekts (5), umfassend:

Erzeugen von Wirbelströmen in dem leitfähigen Objekt (5) und Bereitstellen von Detektionssignalen ($S_d$), die einem magnetischen Reaktionsfeld aufgrund der Wirbelströme zugeordnet sind, mittels einer Sonde (4'), die dazu konfiguriert ist, in einem bestimmten Abstand von dem leitfähigen Objekt (5) angeordnet zu sein; und
Durchführen von Verarbeitungsvorgängen auf der Grundlage der Detektionssignale (Sd), um eine Schätzung physikalischer Größen des leitfähigen Objekts (5) bereitzustellen,
wobei das Ausführen von Verarbeitungsvorgängen das Implementieren eines Dimensionsanalyseverfahrens auf Grundlage des Buckingham-Theorems umfasst.

**13.** Verfahren nach Anspruch 12, wobei das Ausführen von Verarbeitungsvorgängen Folgendes umfasst: Bestimmen von Werten, die einer Ausgangsvariablen ($\Delta Z$) zugeordnet sind, die eine Funktion der Detektionssignale ($S_d$) ist, mittels experimenteller Messungen; Bereitstellen einer gleichzeitigen Schätzung von mindestens zwei physikalischen Größen auf der Grundlage der Analyse einer Entsprechung zwischen den bestimmten Werten, die der Ausgangsvariablen ($\Delta Z$) zugeordnet sind, und adimensionaler Kurven, die Beziehungen zwischen den mindestens zwei physikalischen Größen und der Ausgangsvariablen ($\Delta Z$) darstellen, die mittels numerischer Simulation in einer Offline-Phase in einer Zeit vor den experimentellen Messungen erhalten wurden.

**14.** Verfahren nach Anspruch 13, wobei die physikalischen Größen geometrische, magnetische oder elektrische Größen des leitfähigen Objekts (5) sind, umfassend: Dicke ($\Delta h$); elektrische Leitfähigkeit ($\sigma$); magnetische Permeabilität ($\mu$); Abstand ($l_0$) von der Sonde (4').

**15.** Verfahren nach Anspruch 13 oder 14, wobei das Ausführen von Verarbeitungsvorgängen für die Anwendung des Buckingham-Theorems umfasst: Bestimmen von mindestens drei adimensionalen Gruppen ($\pi_1$, $\pi_2$, $\pi_3$), die einem System bestehend aus der Sonde (4') und dem leitfähigen Objekt (5) zugeordnet sind, von denen eine erste adimensionale Gruppe ($\pi_1$) der Ausgangsvariablen ($\Delta Z$) zugeordnet ist und eine zweite ($\pi_2$) und eine dritte ($\pi_3$) Dimensionsgruppe jeweils einer der zwei physikalischen Größen zugeordnet sind; und Bestimmen der adimensionalen Kurven, die Beziehungen zwischen den adimensionalen Gruppen darstellen, in der Offline-Simulationsphase; wobei die adimensionalen Kurven Konturlinien sind, die den Verlauf der ersten adimensionalen Gruppe ($\pi_1$) als Funktion der zweiten ($\pi_2$) und dritten ($\pi_3$) adimensionalen Gruppe beschreiben.

**Revendications**

**1.** Dispositif de mesure multi-paramètres (1) à courants de Foucault pour l'estimation des quantités physiques d'un objet conducteur (5), comprenant :

un étage de capteurs (2), configuré pour générer des courants de Foucault dans l'objet conducteur (5) et comprenant une sonde (4') configurée pour être disposée à une certaine distance de l'objet conducteur (5) et fournir des signaux de détection ($S_d$) associés à un champ de réaction magnétique dû auxdits courants de Foucault ; et
un étage de traitement (10), configuré pour effectuer des opérations de traitement sur la base des signaux de détection ($S_d$) afin de fournir une estimation des quantités physiques de l'objet conducteur (5),
ledit étage de traitement (10) étant configuré pour fournir ladite estimation au moyen d'un procédé d'analyse dimensionnelle basé sur le théorème de Buckingham.

**2.** Dispositif selon la revendication 1, ledit étage de traitement (10) étant configuré pour : déterminer des valeurs associées à une variable de sortie ($\Delta Z$), étant fonction desdits signaux de détection ($S_d$), au moyen de mesures expérimentales ; fournir une estimation simultanée d'au moins deux grandeurs physiques basée sur l'analyse d'une correspondance entre les valeurs déterminées associées à la variable de sortie ($\Delta Z$) et des courbes adimensionnelles représentant des relations entre les au moins deux grandeurs physiques et ladite variable de sortie ($\Delta Z$) obtenues au moyen d'une simulation numérique dans une phase hors ligne, dans un temps précédant lesdites mesures expérimentales.

**3.** Dispositif selon la revendication 2, les grandeurs physiques étant des grandeurs géométriques, électriques ou magnétiques dudit objet conducteur (5), comprenant : l'épaisseur ($\Delta h$); la conductivité électrique($\sigma$) ; la perméabilité magnétique ($\mu$) ; la distance ($l_0$) par rapport à ladite sonde (4').

**4.** Dispositif selon la revendication 2 ou 3, ledit étage de traitement (10) étant configuré, pour l'application du théorème de Buckingham, pour : déterminer au moins trois groupes adimensionnels ($\pi_1$, $\pi_2$, $\pi_3$) associés à un système constitué de ladite sonde (4') et dudit objet conducteur (5), dont un premier groupe adimensionnel ($\pi_1$) est associé à ladite variable de sortie ($\Delta Z$) et un deuxième ($\pi_2$) et un troisième ($\pi_3$) groupes adimensionnels sont associés à l'une respective desdites deux grandeurs physiques ; et déterminer lesdites courbes adimensionnelles, représentant des relations entre lesdits groupes adimensionnels, dans ladite phase de simulation hors ligne.

**5.** Dispositif selon la revendication 4, lesdites courbes adimensionnelles étant des lignes de contour dans un plan d'analyse adimensionnel, qui décrivent la tendance dudit premier groupe adimensionnel ($\pi_1$) en fonction desdits deuxième ($\pi_2$) et troisième ($\pi_3$) groupes adimensionnels.

6. Dispositif selon la revendication 4 ou 5, ladite variable de sortie ($\Delta Z$) associée audit premier groupe adimensionnel ($\pi_1$) étant une variation d'impédance se produisant lorsque ladite sonde (4') est positionnée au niveau de l'objet (5) par rapport à lorsqu'elle est positionnée dans l'air ; et lesdites deux grandeurs physiques associées auxdits deuxième ($\pi_2$) et troisième ($\pi_3$) groupes adimensionnels sont une épaisseur ($\Delta h$) et, respectivement, une conductivité électrique ($\sigma$) dudit objet conducteur (5).

7. Dispositif selon la revendication 6, ledit étage de traitement (10) étant configuré pour : sélectionner un certain nombre desdites courbes adimensionnelles en fonction des valeurs déterminées respectives associées à la variable de sortie ($\Delta Z$) ; et fournir ladite estimation sur la base des points d'intersection des courbes adimensionnelles sélectionnées dans le plan d'analyse, lesdits deuxième ($\pi_2$) et, respectivement, troisième ($\pi_3$) groupes adimensionnels étant représentés sur les axes x et y et ledit premier groupe adimensionnel ($\pi_1$) définissant une valeur associée auxdites courbes adimensionnelles.

8. Dispositif selon la revendication 7, lesdites courbes adimensionnelles étant représentatives de différentes quantités associées à ladite variable de sortie ($\Delta Z$), comprenant un ou plusieurs des éléments suivants : la composante réelle $Re(\pi_1)$, la composante imaginaire $Im(\pi_1)$, la phase $\Phi(\pi_1)$ et le module $|\pi_1|$.

9. Dispositif selon l'une quelconque des revendications 7-8, ladite étape de traitement (10) étant configurée pour : définir une condition de fiabilité qui lie lesdits deuxième ($\pi_2$) et troisième ($\pi_3$) groupes adimensionnels ; et vérifier que les points d'intersection pour l'estimation simultanée desdites deux grandeurs physiques satisfont ladite condition de fiabilité.

10. Dispositif selon l'une quelconque des revendications 2-9, ledit étage de traitement (10) étant configuré pour : déterminer les valeurs associées à la variable de sortie ($\Delta Z$) à différentes fréquences d'excitation *(f)* de ladite sonde (4') dans la génération desdits courants de Foucault ; et déterminer la correspondance entre les valeurs associées à la variable de sortie ($\Delta Z$) et les courbes adimensionnelles, pour chaque valeur de ladite fréquence d'excitation *(f)*.

11. Dispositif selon l'une quelconque des revendications 2-10, ledit étage de traitement (10) étant configuré pour : au cours de ladite phase hors ligne, déterminer un facteur d'étalonnage *(c)*, en tant que rapport entre les valeurs associées à ladite variable de sortie ($\Delta Z$) estimées par simulation et les valeurs mesurées expérimentalement ; et appliquer ledit facteur d'étalonnage *(c)* auxdites mesures expérimentales.

12. Procédé de mesure multi-paramètres à courants de Foucault (1) pour l'estimation des quantités physiques d'un objet conducteur (5), comprenant :

   la génération de courants de Foucault dans l'objet conducteur (5) et la fourniture de signaux de détection ($S_d$) associés à un champ de réaction magnétique dû auxdits courants de Foucault, au moyen d'une sonde (4') configurée pour être disposée à une certaine distance de l'objet conducteur (5) ; et
   l'exécution des opérations de traitement sur la base des signaux de détection (Sd) afin de fournir une estimation des quantités physiques de l'objet conducteur (5),
   l'exécution des opérations de traitement comprenant la mise en œuvre d'un procédé d'analyse dimensionnelle basé sur le théorème de Buckingham.

13. Procédé selon la revendication 12, la mise en œuvre des opérations de traitement comprenant : la détermination des valeurs associées à une variable de sortie ($\Delta Z$), étant fonction desdits signaux de détection ($S_d$), au moyen de mesures expérimentales ; la fourniture d'une estimation simultanée d'au moins deux grandeurs physiques sur la base de l'analyse d'une correspondance entre les valeurs déterminées associées à la variable de sortie ($\Delta Z$) et des courbes adimensionnelles représentant des relations entre les au moins deux grandeurs physiques et ladite variable de sortie ($\Delta Z$), obtenues au moyen d'une simulation numérique dans une phase hors ligne, dans un temps précédant lesdites mesures expérimentales.

14. Procédé selon la revendication 13, les grandeurs physiques étant des grandeurs géométriques, magnétiques ou électriques dudit objet conducteur (5), comprenant : l'épaisseur ($\Delta h$); la conductivité électrique ($\sigma$); la perméabilité magnétique ($\mu$) ; la distance ($l_0$) par rapport à ladite sonde (4').

15. Procédé selon la revendication 13 ou 14, la mise en œuvre des opérations de traitement comprenant, pour l'application du théorème de Buckingham : la détermination d'au moins trois groupes adimensionnels ($\pi_1$, $\pi_2$, $\pi_3$) associés à un système constitué de ladite sonde (4') et dudit objet conducteur (5), dont un premier groupe

adimensionnel ($\pi_1$) est associé à ladite variable de sortie ($\Delta Z$) et un deuxième ($\pi_2$) et un troisième ($\pi_3$) groupes adimensionnels sont associés à l'une respective desdites deux grandeurs physiques ; et la détermination desdites courbes adimensionnelles représentant les relations entre lesdits groupes adimensionnels dans ladite phase de simulation hors ligne ; lesdites courbes adimensionnelles étant des lignes de contour qui décrivent la tendance dudit premier groupe adimensionnel ($\pi_1$) en fonction desdits deuxième ($\pi_2$) et troisième ($\pi_3$) groupes adimensionnels.

FIG.1

**FIG.2**

**FIG.3A**

FIG.3B

$$Re(\pi_1)$$

FIG.4A

$\mathrm{Im}(\pi_1)$

FIG.4B

$\phi(\pi_1)$

FIG.4C

$|\pi_1|$

FIG.4D

FIG.5

$\pi_2 \sim \sigma$
$\pi_3 \sim \Delta h$

FIG.6

FIG.7

$\pi_2 \sim \sigma$

$\pi_3 \sim \triangle h$

FIG.8

FIG.9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102023000007278

**Non-patent literature cited in the description**

- **W. YIN** ; **A. J. PEYTON**. Thickness measurement of non-magnetic plates using multi-frequency eddy current sensors. *NDT&E International*, January 2007, vol. 40 (1), 43-48
- **M. LU** ; **L. YIN** ; **A. J. PEYTON** ; **W. YIN**. A Novel Compensation Algorithm for Thickness Measurement Immune to Lift-Off Variations Using Eddy Current Method. *IEEE Trans. on Instrumentation and Measurement*, December 2016, vol. 65 (12), 2773-2779
- **E. BUCKINGHAM**. On physically similar systems; illustrations of the use of dimensional equations. *Phys. Rev.*, October 1914, vol. 4, 345-376
- **C. V. DODD** ; **W. E. DEEDS**. Analytical Solutions to Eddy-Current Probe-Coil Problems. *Journal of Applied Physics*, May 1968, vol. 39 (6), 2829-2838